# EUROPÄISCHE PATENTSCHRIFT

(11) **EP 2 962 122 B1**
(45) Veröffentlichungstag und Bekanntmachung des Hinweises auf die Patenterteilung: **12.04.2023**
(21) Anmeldenummer: 14707323.3
(22) Anmeldetag: 26.02.2014
(51) Int. Cl.: G01S 5/18, B25F 3/00

(54) **VORRICHTUNG ZUR ORTUNG VON WERKZEUGEN WÄHREND DES EINSATZES AN EINEM WERKSTÜCK**
DEVICE FOR LOCATING TOOLS DURING DEPLOYMENT ON A WORKPIECE
DISPOSITIF DE LOCALISATION D'OUTILS LORS DE LEUR UTILISATION SUR UNE PIÈCE À USINER

(30) Priorität: 27.02.2013 DE 102013003252
(43) Veröffentlichungstag der Anmeldung: 06.01.2016
(73) Patentinhaber: Sarissa GmbH, 88250 Weingarten (DE)
(72) Erfinder: JAUCH, Volker, 88255 Baienfurt (DE)
(74) Vertreter: Otten, Roth, Dobler & Partner mbB Patentanwälte
(86) Internationale Anmeldenummer: PCT/EP2014/000496
(87) Internationale Veröffentlichungsnummer: WO 2014/131513

(56) Entgegenhaltungen:
- DE-A1-102005 030 212
- DE-A1-102009 045 946
- US-A1- 2005 251 294
- US-B1- 6 536 536

## Beschreibung

Die Erfindung betrifft eine Vorrichtung zur Ortung von Werkzeugen während des Einsatzes an einem Werkstück nach dem Anspruch 1.

Im Handel sind hierzu bereits Vorrichtungen, bei denen Werkstücke für Montagevorgänge in eine gegenüber einer Ortungsvorrichtung fest vorgegebene Position gebracht werden. Die Ortungsvorrichtung ist mit drei Empfängern für Ultraschallsignalen ausgestattet und über Laufzeitmessungen von Signalen verschiedener Sendeeinheiten, die an Werkzeugen angebracht sind, in der Lage, diese Sender zu orten. Hierdurch ist eine Ortung der Werkzeuge sowie eine Bestimmung der Orientierung der Werkzeuge möglich. Somit kann durch Verfolgung der Werkzeugbewegungen die Abfolge von Prozessschritten, beispielsweise Verschraubungen erfasst werden. Wird gleichzeitig ein Werkzeugparameter, beispielsweise der Betriebszustand und/oder das Drehmoment eines Schraubers erfasst, so kann nicht nur die korrekte Abfolge, sondern auch die korrekte Stärke der Verschraubung überprüft werden.

Über einen Monitor kann einer Bedienperson des Werkzeugs die als nächstes zu bearbeitende Verschraubung angezeigt und somit die Abfolge der Tätigkeiten erleichtert werden. Bei Nichteinhaltung der vorgegebenen Prozessschritte kann ein Warnsignal ergehen und/oder das Werkzeug außer Betrieb gesetzt werden. Auf diese Weise bietet das System der Bedienperson aufgrund der Prozessführung eine enorme Hilfestellung, wobei zugleich eine gute Qualitätssicherung gewährleistet ist.

In der EP 1 230 563 B1 ist eine Vorrichtung bekannt geworden, bei der ein Werkstück auf einem Montageband verfahrbar vorgesehen ist.

Dem Werkstück wird eine Identifikation, zum Beispiel eine Produktions- oder Fahrgestellnummer zugeordnet. Die Position des Werkstücks wird dabei über eine Meldeeinrichtung für die Position von auf dem Montageband beförderten Werkstücken erfasst, wobei eine Zuordnungseinheit, welche aus der Entfernung eines Werkzeugs zu der Werkstückposition ein Werkzeug oder eine Werkzeugposition einem Werkstück zuordnet. Dabei können sich Sender und/oder Empfängern, die einem Werkstück zugeordnet sind, auch auf dem Montageband mitbewegen.

Bei den bekannten Vorrichtungen sind die Ortungssensoren üblicherweise fest mit den Werkzeuggehäusen verbunden, woraus der Nachteil resultiert, dass die Werkzeuge angepasst an die Ortungsvorrichtung bereitgestellt werden müssen.

Weiterhin sind diverse Ortungssysteme aus den Schriften DE 10 2005 030 212 A1, US 2005/251 294 A1 und US 6,536,536 B1 bekannt geworden.

Darüber hinaus ist jedoch bereits aus der Druckschrift DE 10 2009 045 946 A1 eine Wechseleinheit mit Energieversorgung und Sensoren für ein Ortungssystem bekannt geworden.

Aufgabe der Erfindung ist es, eine Vorrichtung zur Ortung von Werkzeugen vorzuschlagen, bei der die Anpassung eines Werkzeugs vereinfacht ist.

Diese Aufgabe wird ausgehend von einer Vorrichtung nach dem Oberbegriff des Anspruchs 1 durch dessen kennzeichnende Merkmale gelöst.

Durch die in den Unteransprüchen aufgeführten Maßnahmen sind vorteilhafte Ausführungen und Weiterbildungen der Erfindung möglich.

Dementsprechend zeichnet sich eine erfindungsgemäße Vorrichtung dadurch aus, dass das Wechselmodul als Zwischeneinheit ausgebildet ist und zwischen Werkzeug und der als externer Energiespeicher ausgebildeten Betriebsstromversorgungseinheit eingesetzt ist und dass die Sensoreinheit wenigstens teilweise in ein von dem externen Energiespeicher separates Gehäuse des als die Zwischeneinheit ausgebildeten Wechselmoduls angeordnet ist.

Erfindungsgemäß kann ein solches Werkzeug durch ein Wechselmodul mit Sensoreinheit an eine entsprechende Ortungsvorrichtung sehr einfach angepasst werden. Insbesondere kann ein Werkzeug mit einer entsprechenden Ankopplungsvorrichtung der Betriebsstromversorgungseinheit leicht für die Verwendung in einer Ortungsvorrichtung nachgerüstet werden.

Gemäß der Erfindung wird das Wechselmodul als Zwischeneinheit ausgebildet, die einerseits an das Werkzeug, andererseits jedoch an die Betriebsstromversorgungseinheit zum Beispiel in Form einer Batterie- oder Akkueinheit anzukoppeln ist.

Erfindungsgemäß wird das Wechselmodul als separate Zwischeneinheit ausgebildet und mit Verbindungselementen versehen, die mit Eingangskontakten für die Betriebsstromversorgung zum Verbinden mit einer externen Stromversorgung, beispielsweise einer Batterie- oder Akkueinheit versehen sind.

Ein derartiges Wechselmodul ist besonders geeignet, bereits vorhandene Werkzeuge, die über eine auskoppelbare, externe Betriebsstromversorgung verfügen, durch Zwischenschalten des Wechselmoduls mit einer Sensoreinheit für eine erfindungsgemäße Ortungsvorrichtung nachzurüsten. Als externe Betriebsstromversorgung kommen Energiespeicher wie Batterien oder Akkueinheiten ebenso in Frage, wie verkabelte Stromversorgungen, die über entsprechende Verbindungselemente am Werkzeug eingekoppelt werden.

Gemäß der Erfindung wird die Sensoreinheit wenigstens teilweise in ein vom externen Energiespeicher wie einer Batterie- oder Akkublock separates Gehäuse einer Zwischeneinheit angeordnet. Während in einer nicht erfindungsgemäßen integrierten Bauform die Stromversorgung der Sensoreinheit unmittelbar mit der Betriebsstromversorgung des Werkzeugs verbunden werden kann, werden in der Ausführung des separaten Wechselmoduls Eingangskontakte vorgesehen, die das als Zwischeneinheit ausgebildete Wechselmodul mit einer externen Energieversorgung, beispielsweise einer Batterie- oder Akkueinheit verbinden. Auf der anderen Seite verbindet das Wechselmodul dann das mit dem Wechselmodul verbundene Werkzeua mit der Betriebsstromversorgung. Diese Ausführungsform hat den Vorteil, dass zur Ausrüstung oder Nachrüstung eines Werkzeugs lediglich das Wechselmodul als Zwischeneinheit zwischen Werkzeug und Energieversorgung eingefügt werden muss, sodass die werkzeugseitig vorhandene Energieversorgung, zum Beispiel der zugehörige Akkublock beibehalten werden kann.

Sofern im Falle eines entnehmbaren Energiespeichers des Werkzeugs dieser Energiespeicher ebenfalls im entnommenen Zustand einer Ortung zugänglich sein soll, so kann bei der Entnahme des Energiespeichers das Wechselmodul beispielsweise am Energiespeicher verbleiben. Im Falle mehrerer wechselnder Energiespeicher müsste bei dieser Einsatzvariante jeder Energiespeicher mit einem ortungsfähigen Wechselmodul versehen werden. Der Vorteil dabei ist, dass die Energiespeicher selbst im entnommenen Zustand ortungsfähig sind. Um sicherzustellen, dass das Wechselmodul nicht vom entnommenen Energiespeicher entfernt wird, kann hierbei ein entsprechender Verschluss vorgesehen werden, sodass diesbezüglich die gleichen Vorteile gegeben sind, wie bei einer integrierten Lösung wie oben beschrieben.

Ein Wechselmodul, das gemäß der Erfindung als Zwischeneinheit zwischen Werkzeug und Energieversorgung eingesetzt wird, hat jedoch den weiteren Vorteil, dass es auch am Werkzeug verbleiben kann. Für eine dauerhaft sichere Zuordnung am Werkzeug können an dieser Stelle ebenfalls Verschlüsse vorgesehen werden, die eine unbeabsichtigte Entnahme des Wechselmoduls verhindern. Diese Variante hat zum einen den Vorteil, dass das Werkzeug stets über die gleiche Sensoreinheit zu orten ist und somit die Einbindung in das Ortungssystem einfacher wird. Weiterhin hat diese Variante den Vorteil, dass nicht jeder externe Energiespeicher bzw. Batterie- oder Akkublock mit einem Wechselmodul ausgestattet werden muss.

In einer bevorzugten Ausführungsform der Erfindung wird die Sensoreinheit mit ein oder mehreren Ultraschallsensoren versehen. Ultraschallsensoren haben sich zur Ortung von Werkzeugen bereits bewährt, insbesondere indem durch Laufzeitmessung eine Abstandsmessung zwischen Sender und Empfänger vorgesehen ist. Die entsprechenden Ultraschallsender werden von der Empfängerseite aus getriggert, sodass die Laufzeit erfassbar ist. Bei Verwendung mehrerer Sensoren an einem Werkzeug kann sodann nicht nur die Entfernung, sondern auch die Orientierung des Werkzeugs in Relation zu den Empfangseinheiten ermittelt werden.

In einer bevorzugten Ausführungsform der Erfindung wird zudem eine Schnittstelle für elektromagnetische Strahlung, insbesondere eine Infrarotschnittstelle im Wechselmodul vorgesehen, mittels dem ein Triggersignal für eine Laufzeitmessung übertragbar ist. Mittels eines solchen Triggersignals, das um Größenordnungen schneller als ein zur Ortung im Wege der Laufzeitmessung verwendetes Ultraschallsignal ist, kann eine Laufzeitmessung zwischen zwei voneinander beabstandeten Punkten durchgeführt werden. Das Triggersignal kann beispielsweise auf Empfängerseite dazu verwendet werden, den Sender zu starten. Man kann es jedoch auch so einsetzen, dass ein Sender einem Empfänger über ein Triggersignal das Senden eines Laufzeitsignals anzeigt und somit die Zeitmessung auf Seiten des Empfängers startet.

In einer besonders vorteilhaften Ausführung der Erfindung wird das Wechselmodul zusätzlich mit einer Kontrolleinheit versehen, die eine drahtlose Datenkommunikation ermöglicht. Hierbei kommt beispielsweise ein Sende- und Empfangssystem herkömmlicher Standards, zum Beispiel WLAN, BLUETOOTH etc. infrage. Zum einen kann über eine solche elektromagnetische drahtlose Verbindung auch ein drahtloses Triggersignal wie oben angegeben für einen Ultraschallsensor übermittelt werden. Zum anderen können jedoch auch weitere Daten, beispielsweise

### - Fortsetzung auf der ursprünglichen Seite 7 -

Betriebsdaten des Werkzeugs oder des Energiespeichers übermittelt werden. Es können auch Steuersignale, beispielsweise aufgrund ausgewerteter Ortungsdaten an das Werkzeug übertragen und dort auf eventuell vorgesehenen Anzeigegeräten angezeigt werden.

Zur Anzeige, insbesondere aufgrund derart übertragener Steuersignale können beispielsweise Warnsignale oder Arbeitsanweisungen vorgesehen werden. Diese können z. B. über Anzeigegeräte, wie Kontrolllampen, Displays, Vibratoren, z. B. mit Vibratormotoren oder aber auch wie akustische Ausgabeeinheiten an den Werkzeugbediener mitgeteilt werden.

Verlässt zum Beispiel ein Werker seinen Arbeitsbereich mit dem Werkzeug, welches erfindungsgemäß ausgestaltet ist, oder weicht auf andere Weise von einem vorgegebenen Ablauf ab, so können solche Warnsignale ausgelöst werden. So kann das Werkzeug vibrieren, ein Warnlicht aufleuchten und/oder ein Warnton erklingen.

Bevorzugt wird im Wechselmodul auch ein Datenspeicher zur Speicherung von Betriebsdaten des Werkzeugs vorgesehen. Die Betriebsdaten können dabei einerseits Zustandsdaten des Werkzeugs, Zustandsdaten des Energiespeichers oder Daten über durchgeführte Arbeitsabläufe sein. Es können jedoch ohne Weiteres auch Betriebsdaten in Form von seitens einer Steuereinheit vorgegebenen Arbeitsabläufen in einem solchen Datenspeicher zwischengespeichert und der Bedienperson des Werkzeugs mit entsprechenden Ausgabeeinheiten zur Verfügung gestellt werden.

Bevorzugt weist das Wechselmodul eine Energiekontrolleinheit für die Kontrolle der Betriebsstromversorgung, insbesondere zur Kontrolle eines Energiespeichers auf. Auf diese Weise kann ein Energiespeicher, beispielsweise ein Batterie- oder Akkublock bei der Be- und/oder Entladung und/oder zur Erfassung des Zustandes des Batterie- oder Akkublocks erfasst und kontrolliert werden.

In einer weiteren vorteilhaften Ausführungsform der Erfindung weist das Wechselmodul ein ansteuerbares Schaltelement für den Betriebsstrom des Werkzeugs auf. Auf diese Weise kann durch Ansteuerung dieses Schalters das Werkzeug außer Betrieb und wieder in Betrieb gesetzt werden. Auch eine Begrenzung des Betriebsstroms bzw. der Betriebsspannung ist hierdurch möglich, zum Beispiel um Einfluss auf Werkzeugparameter wie Drehzahl, Drehmoment oder dergleichen zu nehmen. Ein solches Schaltelement ist insbesondere auch von Vorteil, um im Falle einer fehlerhaften Werkzeughandhabung, zum Beispiel bei Ortung des Werkzeugs an einen im Prozessablauf nicht vorgesehenen Ort, das Werkzeug außer Betrieb zu setzen. Wird das Werkzeug an die korrekte Position gebracht, so kann über den einstellbaren Schalter das Werkzeug wieder in Betrieb genommen werden.

Bevorzugt wird der Schalter extern und/oder von der Kontrolleinheit mit drahtloser Datenkommunikation und/oder von der Energiekontrolleinheit für die Betriebsstromversorgung ansteuerbar vorgesehen.

Für eine externe Ansteuerung muss der Schalter dementsprechend unabhängig von der Kontrolleinheit verkabelt oder drahtlos ansteuerbar sein. Eine solche Funktion ist beispielsweise sinnvoll, wenn keine Kontrolleinheit wie oben angegeben in dem Wechselmodul vorhanden ist und eine entsprechende Ansteuerung gewünscht ist. Auch bei vorhandener Kontrolleinheit wie oben angegeben kann ein zusätzlich extern ansteuerbarer Schalter von Vorteil sein, beispielsweise um einen Notstopp oder dergleichen auszulösen, der nicht über die genannte Kontrolleinheit ausgelöst wird.

Vorzugsweise wird das Wechselmodul mit mechanischen Fixierelementen zur Fixierung am Werkzeug und/oder an der Batterie- bzw. Akkueinheit versehen. Die Fixierelemente können beispielsweise Rasthaken oder dergleichen sein, die in entsprechenden Ausnehmungen an korrespondierenden Elementen einrasten.

Ein Ausführungsbeispiel der Erfindung ist in der Zeichnung dargestellt und wird nachfolgend anhand der Figuren näher erläutert.

Im Einzelnen zeigen
- Figur 1: eine schematische Darstellung eines Schraubwerkzeugs gemäß dem Stand der Technik,
- Figur 2: ein erfindungsgemäßes Schraubwerkzeug sowie
- Figur 3: ein schematisches Schaltdiagramm zur Verschaltung der Stromversorgung in einem Wechselmodul.

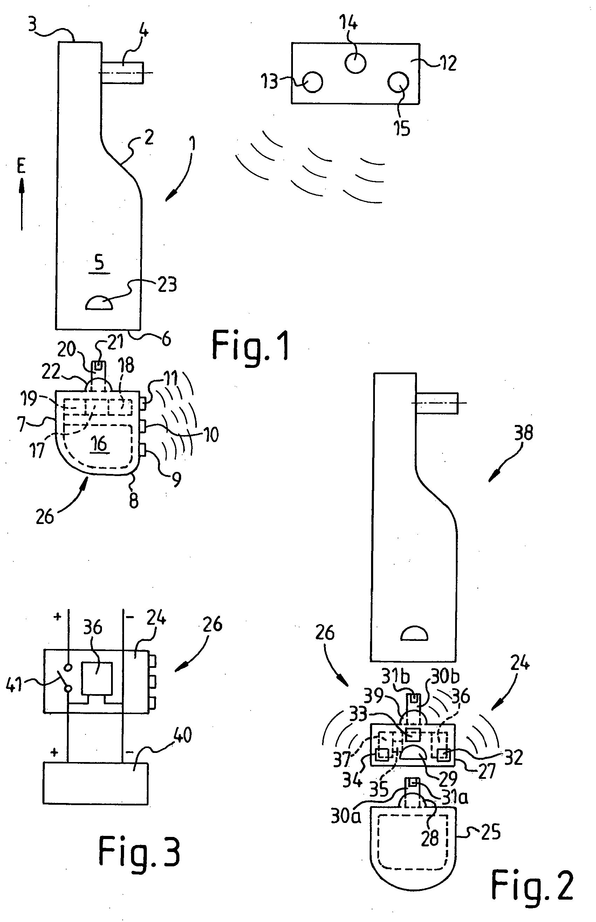

Das Schraubwerkzeug 1 gemäß Figur 1 umfasst ein Gehäuse 2, an dessen Werkzeugseite 3 eine Welle 4 hervorsteht. Die Welle 4 ist üblicherweise elektromotorisch angetrieben und dient zur Aufnahme eines Werkzeugaufsatzes, zum Beispiel eines Schraubaufsatzes.

Das Gehäuse 2 umfasst weiterhin eine Griffzone 5, in der es üblicherweise von Bedienpersonen gehalten und geführt wird.

Gegenüber der Werkzeugseite 3 befindet sich die Anschlussseite 6, um das Schraubwerkzeug 1 mit einer Stromversorgung zu verbinden. In der Ausführung gemäß Figur 1 wird die Stromversorgung über einen Akkublock 7 bewerkstelligt, der als erfindungsgemäßes Wechselmodul 26 ausgestaltet ist. Der Akkublock 7 umfasst ein Akkugehäuse 8, an dem außenseitig drei Ultraschallsensoren 9, 10, 11 angebracht sind. Die Ultraschallsensoren 9, 10, 11 können als Sender und/oder Empfänger ausgestaltet sein, wobei eine korrespondierende Ortungseinheit 12 korrespondierende Ultraschallsensoren 13, 14, 15 aufweist. Sofern die Ultraschallsensoren 9, 10, 11 als Sender ausgestaltet sind, sind die Ultraschallsensoren 13, 14, 15 als Empfänger vorgesehen. Im umgekehrten Fall sind die Sensoren 9, 10, 11 Empfänger und die Sensoren 13, 14, 15 als Sender ausgestaltet.

Zudem wird ein Triggersignal übertragen, sodass das auf der Empfängerseite ankommende Signal hinsichtlich der Laufzeit auswertbar ist.

Im Akkugehäuse 8 befindet sich eine Akkueinheit 16, eine Infrarotschnittstelle 17, eine Kontrolleinheit 18, die eine Drahtlosschnittstelle zur Drahtlosverbindung mit einem externen Steuergerät aufweist, sowie eine Energiekontrolleinheit 19, um den Status der Akkueinheit 16 sowie deren Lade- und/oder Entladevorgänge zu kontrollieren.

Beide Kontrolleinheiten 18, 19 können optional mit Datenspeichern versehen sein.

Der Akkublock 7 umfasst weiterhin einen Kontaktvorsprung 20 mit Kontaktfahnen 21, um die Stromversorgung aus der Akkueinheit 16 mit dem Werkzeug 5 zu verbinden. Weiterhin ist in Figur 1 ein Rasthaken 22 schematisch dargestellt, der beim Einschieben in Richtung des Pfeils E des Akkublocks 7 in das Werkzeug 1 in einer entsprechenden Rastausnehmung 23 verrastet. Das Werkzeug 1 kann ursprünglich ein herkömmliches Akkuwerkzeug sein. Zum Nachrüsten mit einer Sensoreinheit bestehend aus den Sensoren 9, 10, 11 der Infrarotschnittstelle sowie optional den Kontrolleinheiten 18, 19 muss lediglich der Akkublock 7 anstelle des ursprünglichen herkömmlichen Akkublocks verwendet werden.

Die Ausführung gemäß Figur 2 entspricht im Wesentlichen derjenigen gemäß Figur 1, wobei nunmehr gemäß der Erfindung die Sensoreinheit 24 in einem separaten Wechselmodul 26 unabhängig vom Akkublock 25 untergebracht ist. Das Wechselmodul 26 mit Sensoreinheit 24 umfasst ein eigenes Gehäuse 27, das mit dem Akkublock 25 verbindbar ist. Der Akkublock 25 wird hierzu auf das Wechselmodul 26 aufgesteckt und kann hierbei mit seinen Rasthaken 28 in Rastausnehmungen 29 verrasten. Über den Kontaktvorsprung 30 mit Kontakten 31 wird die elektrische Verbindung zwischen Akkublock 25 und Wechselmodul 26 hergestellt.

Das Wechselmodul 26 umfasst wiederum drei Ultraschallsensoren 32, 33, 34, die den oben beschriebenen Ultraschallsensoren 9, 10, 11 gleichen, sowie eine Infrarotschnittstelle 35. Die Kontrolleinheit 36 ist gleich ausgeführt wie die Kontrolleinheit 18. Weiter ist auch eine Energiekontrolleinheit vorgesehen.

Das Wechselmodul 26 kann entsprechend dem vorgeschriebenen Akkublock 7 mit dem Schraubwerkzeug 38 verbunden werden und mit den Rasthaken 39 verrasten. Das Werkzeug 38 ist identisch mit dem Werkzeug 1.

Figur 2 lässt somit die Ausgestaltung der Erfindung als von der Betriebsstromversorgung separates Wechselmodul 26 erkennen, mit dem ein bestehendes Schraubwerkzeug 38 unter Beibehaltung des ursprünglichen Akkublocks 25 zu einem ortungsfähigen Schraubwerkzeug aufgerüstet bzw. nachgerüstet werden kann.

Figur 3 zeigt schematisch die Verbindung der Stromversorgung über ein erfindungsgemäßes Wechselmodul 26 mit der Kontrolleinheit 36. Die Akkueinheit 40 ist mit einem Wechselmodul 26 verbunden, beispielsweise über die Kontakte 31. Die Leitung des Minuspols ist durch das Wechselmodul 26 durchgeschleift, beispielsweise über die Kontakte 31a, 31b. Sie wird in dieser Ausführung ohne Unterbrechung in das entsprechende Werkzeug weiter geführt.

Die Leitung des Pluspols endet im Wechselmodul 26 an einem Schalter 41, der extern oder über die Kontrolleinheit 36 ansteuerbar ist. Somit kann über das Wechselmodul 26 die Stromversorgung des Schraubwerkzeugs 38 ein- oder ausgeschaltet werden. Es versteht sich, dass diese Schaltungsanordnung auch in der nicht erfindungsgemäßen integrierten Lösung gemäß Figur 1 innerhalb des Akkublocks 7 angeordnet werden kann.

Die Kontrolleinheit 36 ist beispielhaft parallel zwischen die stromführenden Leitungen geschaltet, um darzulegen, dass die Kontrolleinheit 36 ihre Energieversorgung aus der Betriebsstromversorgung für das Elektrowerkzeug 1, 38 bezieht. In gleicher Weise wird die komplette Sensoreinheit, das heißt auch die Sensoren 32, 33, 34 mit Strom versorgt.

Der schematische Schaltplan gemäß Figur 3 veranschaulicht, dass die erfindungsgemäßen Zusatzeinheiten keine vom Werkzeug 38 separate Stromversorgung benötigen.

Verbleibt das Wechselmodul bzw. die Sensoreinheit permanent am Energiespeicher, so ist dieser jederzeit zu orten. Verbleibt das Wechselmodul permanent am Werkzeug, so ist das Werkzeug jederzeit zu orten.

Abschließend bleibt noch hinzuzufügen, dass auch beide Varianten kombiniert vorgesehen werden können, beispielsweise ein Wechselmodul, um das Werkzeug ohne Energiespeicher ortungsfähig zu gestalten sowie eine Sensoreinheit in Verbindung mit einem Energiespeicher, um den Energiespeicher ortungsfähig auszubilden, wobei in diesem Fall sowohl eine nicht erfindungsgemäße integrierte Variante, beispielsweise gemäß Figur 1 oder wiederum eine erfindungsgemäße Variante mit separatem Wechselmodul möglich ist.

### Bezugszeichenliste:

- 1: Schraubwerkzeug
- 2: Gehäuse
- 3: Werkzeugseite
- 4: Welle
- 5: Griffzone
- 6: Anschlussseite
- 7: Akkublock
- 8: Akkugehäuse
- 9: Ultraschallsensor
- 10: Ultraschallsensor
- 11: Ultraschallsensor
- 12: Ortungseinheit
- 13: Ultraschallsensor
- 14: Ultraschallsensor
- 15: Ultraschallsensor
- 16: Akkueinheit
- 17: Infrarotschnittstelle
- 18: Kontrolleinheit
- 19: Energiekontrolleinheit
- 20: Kontaktvorsprung
- 21: Kontaktaufnahme
- 22: Rasthaken
- 23: Rastausnehmung
- 24: Sensoreinheit
- 25: Akkublock
- 26: Wechselmodul
- 27: Gehäuse
- 28: Rasthaken
- 29: Rastausnehmung
- 30: Rastvorsprung
- 31: Kontakt
- 32: Ultraschallsensor
- 33: Ultraschallsensor
- 34: Ultraschallsensor
- 35: Kontrolleinheit
- 36: Energiecontroller
- 37: Werkzeugcontroller
- 38: Schraubwerkzeug
- 39: Rasthaken
- 40: Akkueinheit
- 41: Schalter

## Patentansprüche

1. Vorrichtung zur Ortung von Werkzeugen (38) während des Einsatzes an einem Werkstück mittels einer Sensoreinheit (24) mit Ortungssensoren (32, 33, 34) insbesondere Ultraschallsensoren, wobei die Vorrichtung zur Ortung von Werkzeugen (38) die Sensoreinheit (24) und die Ortungssensoren (32, 33, 34) sowie ein Wechselmodul (26) umfasst, wobei die Sensoreinheit (24) zur Ortung des Werkzeugs (38) in dem Wechselmodul (26) angeordnet ist, wobei das Wechselmodul (26) Ausgangskontakte zur Betriebsstromversorgung des Werkzeugs (38) aufweist, wobei das Werkzeug (38) mit entsprechenden Verbindungselementen zur Verbindung mit dem Wechselmodul (26) ausgestaltet ist, wobei das Wechselmodul (26) als separate Einheit ausgebildet ist und eine Koppeleinrichtung mit Eingangskontakten zum Ankoppeln einer Betriebsstromversorgungseinheit (25) aufweist, wobei die Betriebsstromversorgungseinheit (25) auch als Stromquelle für die Sensoreinheit (24) dient,
**dadurch gekennzeichnet, dass** das Wechselmodul (26) als Zwischeneinheit ausgebildet ist und zwischen Werkzeug (38) und der als externer Energiespeicher ausgebildeten Betriebsstromversorgungseinheit (25) eingesetzt ist und dass die Sensoreinheit (24) wenigstens teilweise in ein von dem externen Energiespeicher (25) separates Gehäuse (27) des als die Zwischeneinheit ausgebildeten Wechselmoduls (26) angeordnet ist.

2. Vorrichtung nach Anspruch 1, wobei die Sensoreinheit (24) einen oder mehrere Ultraschallsensoren (32, 33, 34) umfasst.

3. Vorrichtung nach einem der vorgenannten Ansprüche, wobei das Wechselmodul (26) eine Kontrolleinheit (36) mit drahtloser Datenkommunikation umfasst.

4. Vorrichtung nach einem der vorgenannten Ansprüche, wobei das Wechselmodul (26) einen Datenspeicher zur Speicherung von Betriebsdaten des Werkzeugs (38) umfasst.

5. Vorrichtung nach einem der vorgenannten Ansprüche, wobei das Wechselmodul (26) einen ansteuerbaren Schalter (41) für die Betriebsstromversorgung des Werkzeugs (38) umfasst.

6. Vorrichtung nach dem vorgenannten Anspruch, wobei der Schalter (41) extern ansteuerbar und/oder von der in Anspruch 3 definierten Kontrolleinheit (36) mit drahtloser Datenkommunikation und/oder einer im Wechselmodul enthaltenen Energiekontrolleinheit für die Kontrolle der Betriebsstromversorgung ansteuerbar ist.

7. Werkzeug (38) mit einer Vorrichtung zur Ortung von Werkzeugen (38) nach Anspruch 1.

## Claims

1. Apparatus for locating tools (38) during use on a workpiece by means of a sensor unit (24) having locating sensors (32, 33, 34), in particular ultrasonic sensors, wherein the apparatus for locating tools (38) comprises the sensor unit (24) and the locating sensors (32, 33, 34) and an interchangeable module (26), wherein the sensor unit (24) for locating the tool (38) is arranged in the interchangeable module (26), wherein the interchangeable module (26) has output contacts for supplying the tool (38) with operating current, wherein the tool (38) is configured with corresponding connecting elements for connection to the interchangeable module (26), wherein the interchangeable module (26) is in the form of a separate unit and has a coupling device with input contacts for coupling an operating current supply unit (25), wherein the.operating current supply unit (25) is also used as a current source for the sensor unit (24), **characterized in that** the interchangeable module (26) is in the form of an intermediate unit and is inserted between the tool (38) and the operating current supply unit (25) that is in the form of an external energy store, and **in that** the sensor unit (24) is at least partially arranged in a housing (27) of the interchangeable module (26) that is in the form of the intermediate unit, which housing is separate from the external energy store (25).

2. Apparatus according to Claim 1, wherein the sensor unit (24) comprises one or more ultrasonic sensors (32, 33, 34).

3. Apparatus according to one of the preceding claims, wherein the interchangeable module (26) comprises a control unit (36) with wireless data communication.

4. Apparatus according to one of the preceding claims, wherein the interchangeable module (26) comprises a data memory for storing operating data relating to the tool (38) .

5. Apparatus according to one of the preceding claims, wherein the interchangeable module (26) comprises a controllable switch (41) for supplying the tool (38) with operating current.

6. Apparatus according to the preceding claim, wherein the switch (41) can be externally controlled and/or can be controlled by the control unit (36) with wireless data communication, as defined in claim 3, and/or by an energy control unit for controlling the operating current supply that is contained in the interchangeable module.

7. Tool (38) having an apparatus for locating tools (38) according to Claim 1.

## Revendications

1. Dispositif de localisation d'outils (38) pendant l'utilisation sur une pièce au moyen d'une unité à capteurs (24) comprenant des capteurs de localisation (32, 33, 34), notamment des capteurs à ultrasons, le dispositif de localisation d'outils (38) comprenant l'unité à capteurs (24) et les capteurs de localisation (32, 33, 34) et un module d'échange (26), l'unité à capteurs (24) destinée à localiser l'outil (38) étant disposée dans le module d'échange (26), le module d'échange (26) comportant des contacts de sortie destinés à alimenter l'outil (38) en courant de fonctionnement, l'outil (38) étant conçu avec des éléments de liaison correspondants destinés à la liaison au module d'échange (26), le module d'échange (26) étant conçu comme une unité séparée et comportant un dispositif de couplage comprenant des contacts d'entrée destinés au couplage d'une unité d'alimentation en courant de fonctionnement .(25), l'unité d'alimentation en courant de fonctionnement (25) servant également de source de courant à l'unité de capteur (24),
**caractérisé en ce que** le module d'échange (26) est conçu comme une unité intermédiaire et est inséré entre l'outil (38) et l'unité d'alimentation en courant de fonctionnement (25) conçue comme un accumulateur d'énergie extérieur et **en ce que** l'unité à capteurs (24) est disposée au moins en partie dans un boîtier (27), séparé de l'accumulateur d'énergie extérieur (25), du module d'échange (26) conçu comme une unité intermédiaire.

2. Dispositif selon la revendication 1, l'unité de capteur (24) comprenant un ou plusieurs capteurs à ultrasons (32, 33, 34).

3. Dispositif selon l'une des revendications précédentes, le module d'échange (26) comprenant une unité de commande (36) avec communication de données sans fil.

4. Dispositif selon l'une des revendications précédentes, le module d'échange (26) comprenant une mémoire de données destinée à mémoriser des données de fonctionnement de l'outil (38).

5. Dispositif selon l'une des revendications précédentes, le module d'échange (26) comprenant un commutateur commandable (41) destiné à alimenter l'outil (38) en courant de fonctionnement.

6. Dispositif selon la revendication susmentionnée, le commutateur (41) pouvant être commandé de l'extérieur et/ou par l'unité de commande (36), définie dans la revendication 3, avec une communication de données sans fil et/ou une unité de commande d'énergie contenue dans le module d'échange et destinée à commander l'alimentation en courant de fonctionnement.

7. Outil (38) comprenant un dispositif de localisation d'outils (38) selon la revendication 1.
